# EUROPÄISCHE PATENTSCHRIFT

(11) **EP 2 331 306 B1**
(45) Veröffentlichungstag und Bekanntmachung des Hinweises auf die Patenterteilung: **25.04.2012**
(21) Anmeldenummer: 09778481.3
(22) Anmeldetag: 11.09.2009
(51) Int. Cl.: B28B 23/00, G02B 6/00, E04C 1/42, E04C 2/54

(54) **VERFAHREN ZUR HERSTELLUNG EINES LICHTLEITENDEN BAUKÖRPERS**
METHOD FOR THE PRODUCTION OF A LIGHT-GUIDING BUILDING ELEMENT
PROCÉDÉ DE PRODUCTION D'UN ÉLÉMENT DE CONSTRUCTION COMPRENANT DES CONDUCTEURS OPTIQUES

(30) Priorität: 11.09.2008 DE 102008046769
(43) Veröffentlichungstag der Anmeldung: 15.06.2011
(73) Patentinhaber: LCT GesmbH Light & Concrete Technology Dipl. Ing. Robert Hofer, 8181 St. Ruprecht a.d. Raab (AT)
(72) Erfinder: FISCHER, Oliver, 6850 Dornbirn (AT)
(74) Vertreter: Riebling, Peter
(86) Internationale Anmeldenummer: PCT/EP2009/006606
(87) Internationale Veröffentlichungsnummer: WO 2010/028841

(56) Entgegenhaltungen:
- WO-A-2007/096083
- DE-U1-202006 000 028
- JP-A- 2006 220 981
- US-A- 4 302 414
- US-A1- 2007 074 484

## Beschreibung

Die Erfindung betrifft ein Verfahren zur Herstellung eines lichtleitenden Baukörpers nach dem Oberbegriff des Patentanspruches 1.

Ein lichtleitender Baukörper und ein Verfahren zur Herstellung desselben sind beispielsweise mit dem Gegenstand der EP 03752967 bekannt geworden.

Bei dieser bekannten Anordnung wird der lichtleitende Baukörper dadurch hergestellt, dass in eine Schalungsform über ein Verteilermundstück von einem Band abgezogene Lichtleitstäbe aufgespreizt werden und als parallele Lichtleitstäbe nebeneinander liegend in die Schalungsform Schicht für Schicht eingelegt werden. Auf jede Schicht wird ein aushärtbarer Beton oder ein anderer aushärtbarer Stoff aufgefüllt, so dass am Schluss nach dem Aushärten dieses Körpers die Schalung entfernt werden kann und der Baukörper fertig ausgehärtet vorliegt. Er braucht dann nur noch auf Länge abgelängt zu werden.

Nachteil dieses bekannten Verfahrens ist, dass nur ein Schicht-auf-Schicht-Arbeiten möglich ist, was mit dem Nachteil einer hohen Produktionszeit verbunden ist.

Weiterer Nachteil ist, dass nicht sichergestellt werden kann, dass die über das Verteilermundstück in parallelem Abstand eingebrachten Lichtleitstäbe auch tatsächlich parallel verlaufen, so dass sie sich beim Einbringen in die Form gegenseitig berühren können und hierbei die Festigkeit des Gusskörpers beeinträchtigt wird. Es könnten schlimmstenfalls eng aneinanderliegende Lichtleitstäbe vorhanden sein, zwischen die kein aushärtbarer Beton mehr gegossen werden kann, wodurch sich dort Stellen mit schwacher Tragfähigkeit ergeben.

Weiterer Nachteil ist, dass mit dem genannten Verfahren nicht sichergestellt ist, dass die Lichtleitstäbe unter Spannung in die aushärtbare Matrix eingebracht werden. Dies kann bedeuten, dass die Lichtleitstäbe verkrümmt eingebracht werden oder sogar brechen können, was zu unerwünschten Lichtunterbrechungen im Bereich des jeweiligen Lichtleitstabes führt.

Die JP 2006 220981 A und US 2007/074484 A1 offenbaren ein Verfahren zur Herstellung lichtleitender Baukörper nach dem Oberbegriff des Patentanspruches 1. Das Lichteitergewebe der Vorrichtung der WO 2007/096083 A besteht aus einer Vielzahl von parallel nebeneinander angeordneten Lichtleiterstäben, die im Bereich einer textilen Bindung miteinander auf Abstand fixiert sind. Für diese Druckschriften gelten auch die zur eingangs erwähnten EP 03752967 A1 beschriebenen zweiten und dritten Nachteile.

Der Erfindung liegt deshalb die Aufgabe zugrunde, ein Verfahren zur Herstellung eines lichtleitenden Baukörpers so weiterzubilden, dass mit wesentlich schnellerer Produktionszeit ein höher belastbarer Baukörper erreicht wird.

Zur Lösung der gestellten Aufgabe ist die Erfindung durch die technische Lehre des Anspruches 1 gekennzeichnet.

Grundlegendes Merkmal der Erfindung ist, dass in einem ersten Verfahrensschritt die Lichtleitstäbe formgebend auf einem Gießkörper fixiert werden, der bevorzugt als Spannrahmen ausgebildet ist, dass in einem zweiten Verfahrensschritt der so mit den Lichtleitstäben bestückte Gießkörper mit der aushärtbaren Masse ausgefüllt wird und dass in einem dritten Verfahrensschritt die Schalung entfernt wird, so dass der Gießkörper in der aushärtbaren Masse verbleibt und die dort fixierten Lichtleitstäbe nun unverrückbar in der aushärtbaren Masse verbleiben.

Damit ergibt sich der Vorteil, dass von vorneherein auf ein Schicht-auf-Schicht-Verfahren verzichtet wird und dass ein Gießkörper in einem einzigen Arbeitsgang mit der entsprechenden Vergussmasse ausgefüllt wird. Damit besteht der Vorteil, dass durch vorheriges Fixieren der Lichtleitstäbe oder eines textilen Gewebes, in dem die Lichtleitstäbe gebunden sind, auf dem Gießkörper nun eine einwandfreie Lagenfixierung aller Lichtleitstäbe gegeben ist. Sie können aufgrund ihrer Fixierung auf dem Gießkörper nicht mehr verrutschen, halten ständig ihren parallelen Abstand zueinander und können somit leicht ausgegossen werden, ohne dass die Gefahr besteht, dass der Abstand der Lichtleitstäbe während des Ausgießens des Gießkörpers sich verändert und zu schwächenden Bezirken im Baukörper führt.

Gemäß der Erfindung ist es vorgesehen, dass die Lichtleitstäbe in einem textilen Lichtleitergewebe gebunden sind und dieses textile Lichtleitergewebe zickzackförmig zwischen voneinander beabstandet angeordnete Lamellen eines Spannrahmens aufgewickelt wird.

Damit wird das gesamte Gewebe zickzackförmig zwischen oberen und unteren Lamellen aufgenommen und bildet - außerhalb der Lamellen - ein unter Spannung stehendes Lichtleitergewebe, wobei die einzelnen Gewebeschichten einen Abstand von z. B. 4 mm haben.

Der Spannrahmen kann hierbei Abmessungen in Höhe in etwa von 3 m Länge und 1 m Breite sowie 1 m Höhe aufweisen. Ein so hergestellter Baukörper hat dann eben auch Außenabmessungen von 3 x 1 x 1 m.

Die vorliegende Erfindung ist nicht auf die Ausbildung eines Spannrahmens als Gießkörper beschränkt.

In einer anderen Ausgestaltung kann es vorgesehen sein, dass in der Schalung selbst Kedernuten eingebracht sind und in diese Kedernuten Kederstäbe mit Spiel eingesteckt werden können.

Erfindungsgemäß werden das Lichtleitergewebe oder auch die bloßen Lichtleiterstäbe wiederum zwischen den Lamellen oder den Kederstäben aufgewickelt, und die Kederstäbe sind in den vorher genannten Kedernuten der Schalung fixiert. Auch hierdurch wird die Schalung selbst als Gießkörper ausgebildet und kann sofort von einer Seite her mit einer aushärtbaren Masse aufgefüllt werden.

Die vorliegende Erfindung beansprucht eine ganze Reihe von aushärtbaren Massen als erfindungswesentlich, mit denen es möglich ist, den Gießkörper auszugießen. Vorgesehen sind sämtliche aushärtbaren Massen, die nach einer bestimmten Zeit aushärten und dann einen Baukörper hoher Belastbarkeit bilden.

Solche aushärtbaren Gießmassen können folgende Stoffe sein:
Beton (Betonmatrix)
Mineralguss-Massen
Kunststoffguss-Massen (einschließlich Acryl- oder PMMA oder Polymerharze) flüssiges Holz
Gipse und Kalke (hydraulische Bindemittel)
Puzzolane (latenthydraulische Bindemittel einschließlich Silikate und Flugasche) Trasszemente
und dergleichen mehr.

Selbstverständlich gehören zu allen Zementsorten die Arten CEM I, II, III und IV sowie V.

Die Erfindung ist also nicht auf die Art der aushärtbaren Gießmasse beschränkt, sondern beansprucht alle aushärtbaren Gießmassen, die in der Lage sind, in den oben genannten Gießkörper und die durch die Lichtleitstäbe bzw. durch die Lichtleitergewebe gebildeten Zwischenräume einzudringen und damit einen ausgehärteten hochbelastbaren Baukörper zu bilden.

Von besonderem Vorteil ist, dass sowohl die Schalung und/oder der mit den Lichtleitern bewickelte Gießkörper beim Eingießen und/oder vor dem Aushärten der Gießmasse gerüttelt werden können.

Es werden nachfolgend verschiedene Ausführungsbeispiele beschrieben, wobei wichtig ist, dass die Lichtleitstäbe selbst als bloße Fäden einzeln auf die voneinander beabstandeten Lamellen oder Kederstäbe im Abstand aufgewickelt werden können oder - in einer zweiten Ausführungsform - dass die Lichtleitstäbe in einem Lichtleitergewebe textil gebunden sind und dieses Lichtleitergewebe nun ebenfalls zwischen den abstandshaltenden und abstandsgebenden Lamellen oder Kederstäben aufgewickelt wird.

Beide Ausführungsformen werden als erfindungswesentlich beansprucht.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die Darstellung eines Lichtleitergewebes mit Lichtleitstäben, die in einer textilen Bindung fixiert sind
- Figur 2:: die perspektivische Ansicht eines Spannrahmens
- Figur 3:: der Schnitt durch einen Spannrahmen
- Figur 4:: die Seitenansicht des Spannrahmens
- Figur 5:: die Draufsicht auf den Spannrahmen
- Figur 6:: eine erste Möglichkeit zum Ausgießen des Spannrahmens nach den Figuren 2 bis 5 in einem Tauchverfahren
- Figur 7:: der Spannrahmen in Figur 6 in fertig getauchtem Zustand
- Figur 8:: eine zweite Ausführungsvariante zum Ausgießen des Gießkörpers in einer Blockpresse
- Figur 9:: eine dritte Ausgestaltung des Gießkörpers, in den eine aushärtbare Masse eingepresst wird
- Figur 10:: eine weitere Ausgestaltung der Erfindung mit einem Gießkörper, der von oben her aufgefüllt wird
- Figur 11:: eine weitere Ausgestaltung, bei der der Gießkörper nur noch durch eine Schalung und in der Schalung einsteckbaren Kederstäben gebildet ist
- Figur 12:: schematisiert das Schema nach Figur 11
- Figur 13:: eine vergrößerte Detailansicht des Einbaus der Kederstäbe in die Schalung
- Figur 14:: eine weitere Ausgestaltung, die für alle Ausführungsbeispiele dient, bei dem nicht das Lichtleitergewebe selbst auf den Gießkörper aufgewickelt ist, sondern die Lichtleitstäbe ohne textile Bindung als separate Fäden aufgewickelt sind
- Figur 15:: Eine weitere Ausgestaltung eines Gießkörpers

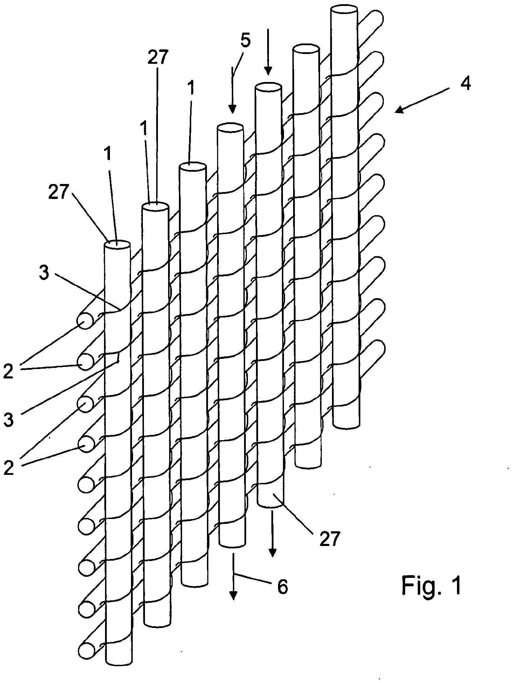

In Figur 1 ist allgemein ein Lichtleitergewebe 4 dargestellt, dass aus einer Vielzahl von parallel nebeneinander angeordneten Lichtleitstäben 1 besteht, die im Bereich einer textilen Bindung miteinander auf Abstand fixiert sind.

Die textile Bindung besteht hierbei aus einer Vielzahl von Monofilfäden 2, die durch Kettfäden 3 miteinander verbunden sind, wobei die Kettfäden 3 die Lichtleitstäbe 1 auf Abstand parallel zueinander halten.

Statt der textilen Bindung können selbstverständlich auch andere Bindungen vorgesehen werden, wie z. B. eine Bindung mit dünnem Draht, dass also z. B. die Kettfäden durch dünnen Draht ausgetauscht sind.

Bei einem solchen Lichtleitergewebe ist maßgebend, dass beispielsweise das Licht in Pfeilrichtung 5 von oben her in die oberen Stirnseiten 27 der Lichtleitstäbe 1 eindringt, durch den Lichtleitstab 1 im Wege der Totalreflektion transportiert wird und in Pfeilrichtung 6 an der unteren Stirnseite 27 wieder austritt.

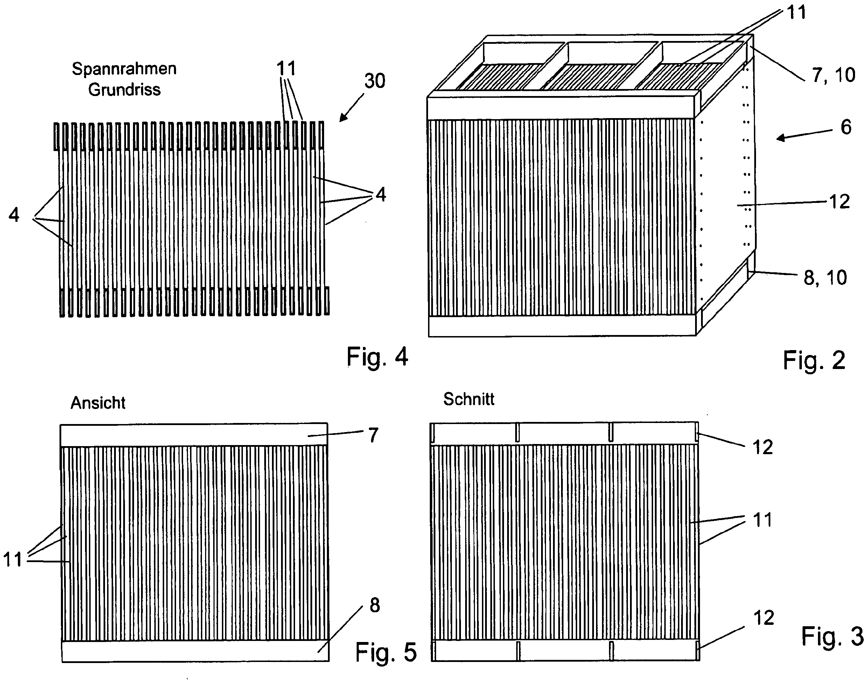

Wichtig ist nun, dass das hier gezeigte Lichtleitergewebe 4 in einem einzigen Arbeitsvorgang ausgegossen werden kann, und hierzu dient das Ausführungsbeispiel nach den Figuren 3 bis 5 in einer ersten Variante.

Dort ist ein Spannrahmen 7 dargestellt, der aus einem rahmenförmigen Oberteil 8 und einem gleichen, rahmenförmigen Unterteil 9 besteht.

Nachdem die beiden Teile 8, 9 gleich ausgebildet sind, reicht es aus, ein einziges Teil zu beschreiben.
Das Ober- oder Unterteil 8, 9 besteht aus Rahmenteilen 10, die aus einzelnen Profilen zusammengesetzt sind und so den Rahmen bilden, wobei auch abstandshaltende Zwischenrahmenteile eingesetzt sind, um den gesamten Rahmenteil 10 stabil zu gestalten.

Im Bereich jedes Rahmenteils 10 sind eine Vielzahl von Lamellen 11 auf Abstand eingesetzt und dort fixiert.

Der Gießkörper 30 nach der Erfindung besteht nun darin, dass das Lichtleitergewebe 4 zickzackförmig zwischen den oberen und unteren Lamellen 11 des Ober- und Unterteils 8, 9 aufgewickelt wird, so wie dies in Figur 4 dargestellt ist. Dadurch ergeben sich eine Vielzahl von annähernd parallel nebeneinander liegenden Lagen des Lichtleitergewebes, wobei die Lichtleitstäbe entweder senkrecht zur Zeichenebene der Figur 4 oder auch in der Zeichenebene der Figur 4 verlaufen können.

Ein mit diesem Spannrahmen 7 hergestellter Gießkörper 30 wird nun verschiedenen Ausgussverfahren unterworfen, wie dies anhand der folgenden Zeichnungen erläutert wird.

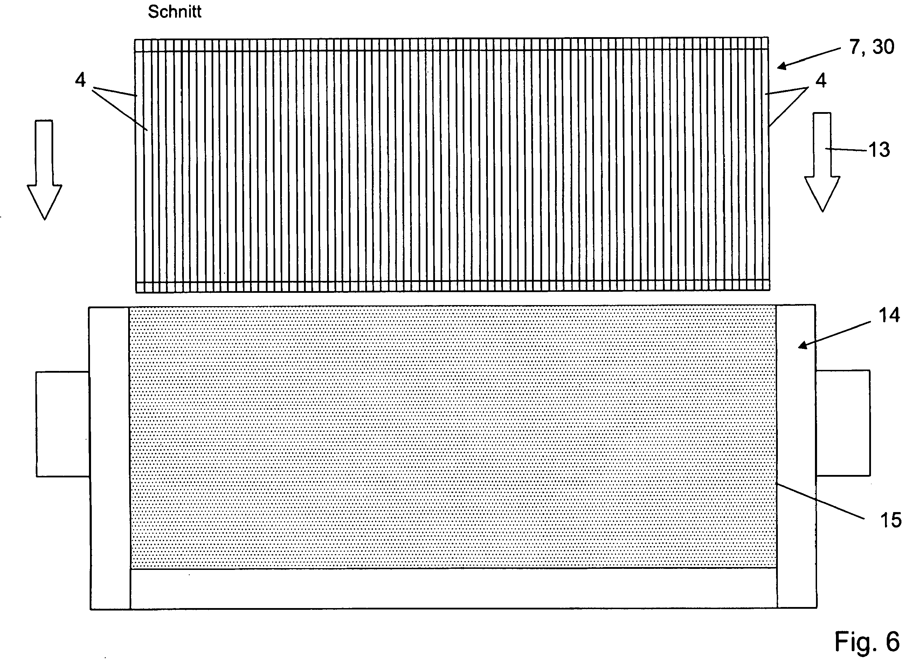

In Figur 6 ist dargestellt, dass der Gießkörper 30 als Spannrahmen 7 in Pfeilrichtung 13 in eine nach oben offene Schalung 14 abgesenkt wird, wobei diese Schalung 14 mit einer aushärtbaren Betonmatrix 15 ausgefüllt ist. Die Betonmatrix ist hierbei noch flüssig.

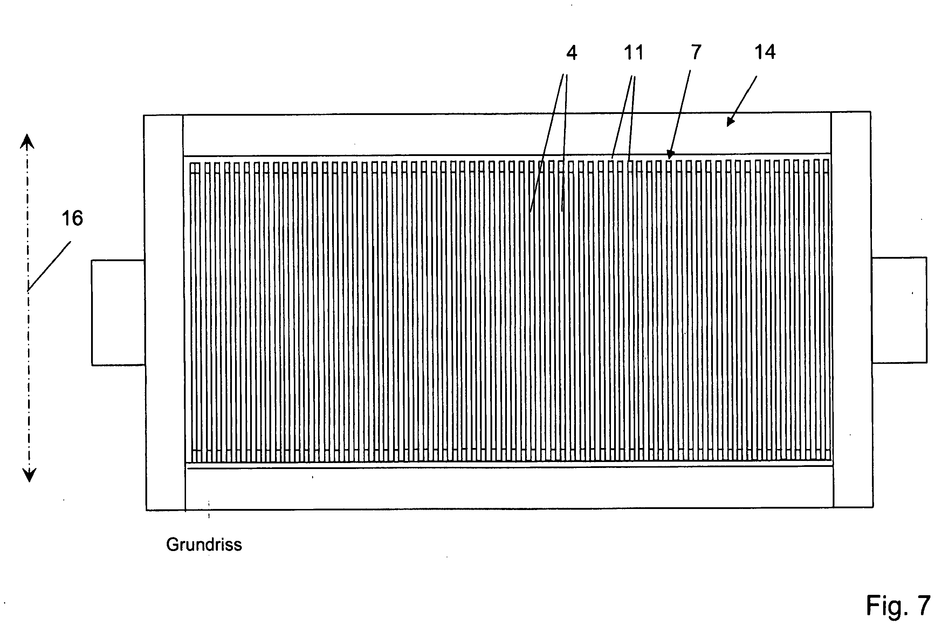

Beim Absenken in Pfeilrichtung 13 des Gießkörpers 30 in die Schalung 14 dringt nun die Betonmatrix 15 zwischen alle auf Abstand gehaltenen Lichtleitergewebe 4 ein und füllt somit den gesamten Gießkörper 30 aus. Dies ist in Figur 7 dargestellt. Sobald der Gießkörper 30 ausgehärtet ist, wird die Schalung 14 durch Wegschlagen entfernt, und der Spannrahmen 7 verbleibt als verlorener Körper in dem nun hergestellten lichtleitenden Baukörper.

Es kann vorgesehen sein, dass die Lamellen 11 nachträglich aus dem so hergestellten Baukörper herausgezogen werden.

Hierbei gibt es verschiedene Möglichkeiten. Entweder werden die Lamellen 11 aus dem noch nicht ganz ausgehärteten Baukörper herausgezogen, oder in einer anderen Ausgestaltung kann es vorgesehen sein, dass die Lamellen 11 mit einem die Aushärtung verzögernden Lack oder einem Fett beschichtet sind, so dass sie ohne Weiteres auch aus dem ausgehärteten Baukörper herausgezogen werden.

Es können dann auch die Seitenwände 12 des Spannrahmens 7 abgeschlagen werden, welche Seitenwände 12 zur Abstandhaltung zwischen dem Oberteil 8 und dem Unterteil 9 dienten.

Mit Entfernung der Schalung 14 ist der ausgehärtete Baukörper fertig. Er kann an seiner Oberfläche noch entsprechend angeschliffen werden, um die lichtaufnehmenden Stirnseiten der Lichtleitstäbe frei zu machen, um diese mit höchstmöglichem Wirkungsgrad von der Lichtquelle bestrahlen zu lassen.

Ebenso ist es möglich, die Oberfläche dieses ausgehärteten Baukörpers in beliebiger Weise noch zu verändern, z. B. durch Sandstrahlen, durch Absäuern, durch Lackieren, Bürsten und dergleichen Behandlungsschritte mehr.

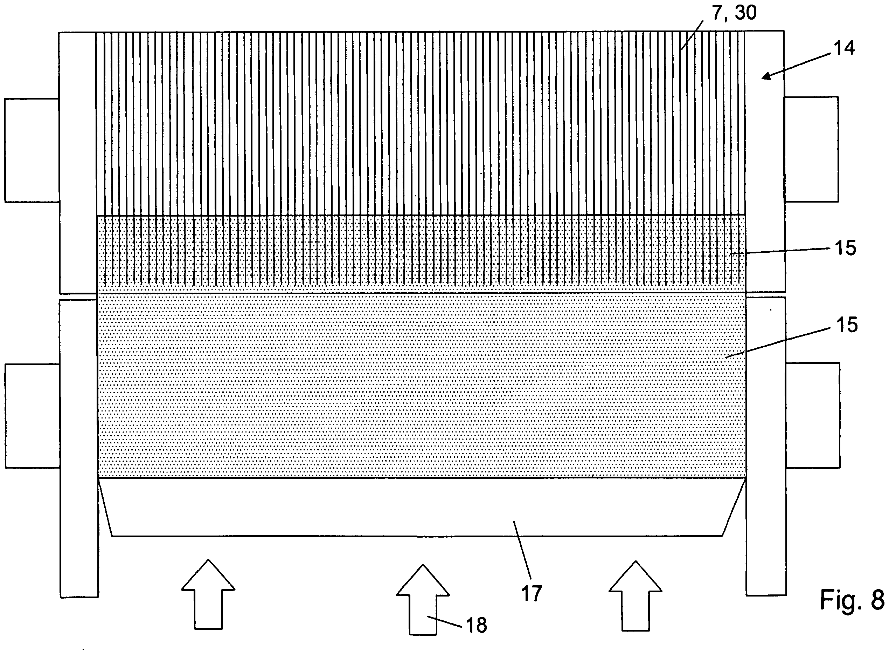

In Figur 8 ist als weitere Ausführungsvariante dargestellt, dass der aus dem Spannrahmen 7 gebildete Gießkörper 30 von unten her mit einer aushärtbaren Betonmatrix 15 angefüllt wird. Hierzu ist die aushärtbare Betonmatrix 15 in einer Schalung 14 angebracht, wobei die Unterseite der Schalung durch einen Pressstempel 17 gebildet ist, auf dem die Betonmatrix 15 aufgefüllt ist. Wird der Pressstempel 17 nun in Pfeilrichtung 18 nach oben gedrückt, dringt die Betonmatrix 15 als flüssiger Baustoff zwischen die einzelnen Wände der Lichtleitergewebe 4 in den Spannrahmen 7 hinein und füllt diesen von unten nach oben gehend aus.

Die Figur 7 zeigt, dass an dem Spannrahmen 7 noch entsprechende vorspannungserzeugende Mittel vorhanden sein können, um eine Vorspannung zwischen dem Oberteil 8 und dem Unterteil 9 in Spannrichtung 16 zu erzeugen.

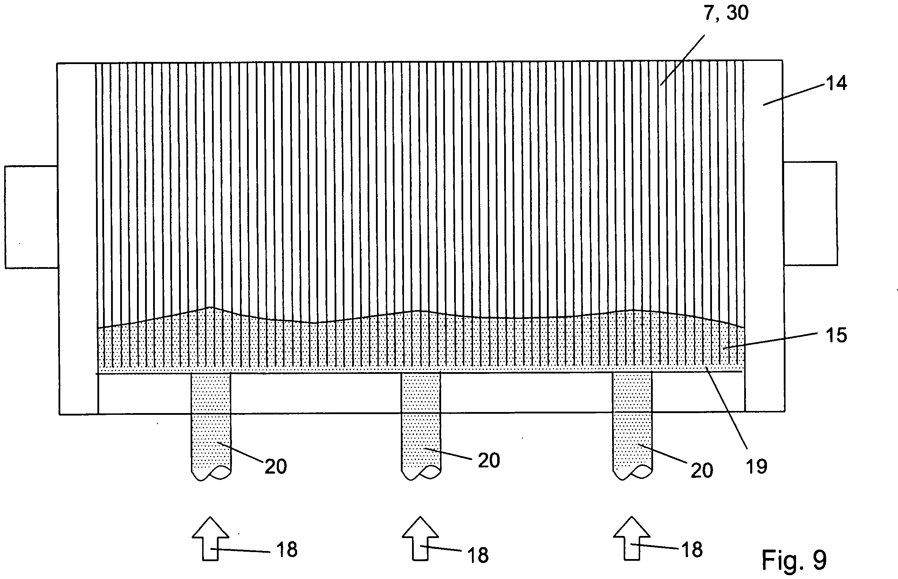

Als dritte Ausführungsvariante ist in Figur 9 dargestellt, dass der aus dem Spannrahmen 7 gebildete Gießkörper 30 von unten her unter Druck mit der aushärtbaren Betonmatrix 15 ausgefüllt wird. Zu diesem Zweck ist ein Abschlussstempel 19 an der Schalung 14 vorhanden, durch den flüssigkeitsleitend eine Reihe von Rohren 20 hindurchführen. In diese Rohre 20 wird in Pfeilrichtung 18 die aushärtbare Betonmatrix 15 unter Druck eingespeist und füllt deshalb nachfolgend Stück für Stück von unten nach oben gehend den Gießkörper 30 aus.

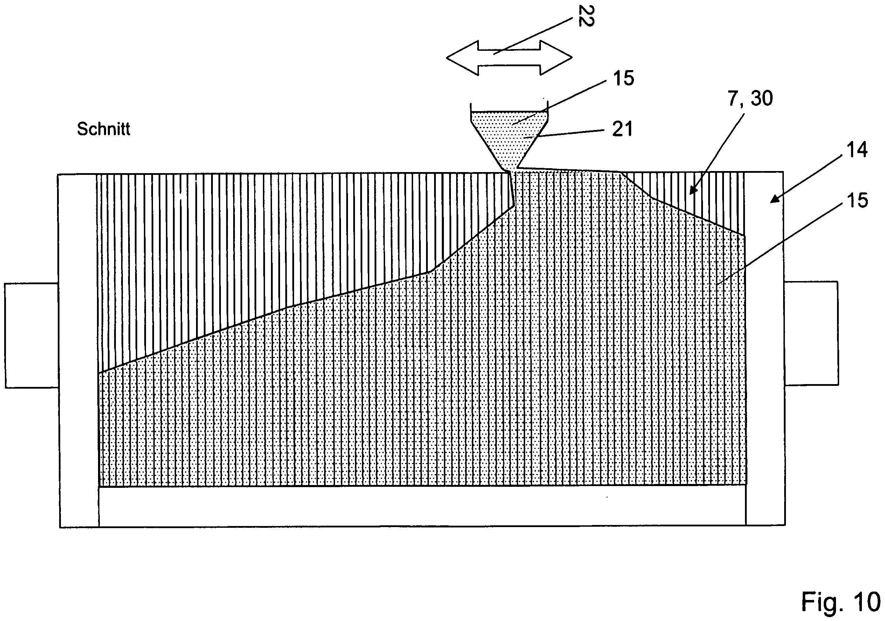

Die Figur 10 zeigt eine weitere Herstellungsvariante, bei der erkennbar ist, dass der Spannrahmen 7 in eine Schalung 14 eingelegt ist und von oben her ein Einfülltrichter 21 mit der aushärtbaren Betonmatrix 15 befüllt ist, und dieser Einfülltrichter 21 wird in den Pfeilrichtungen 22 über dem Gießkörper 30 verfahren, um diesen so von oben her aufzufüllen.

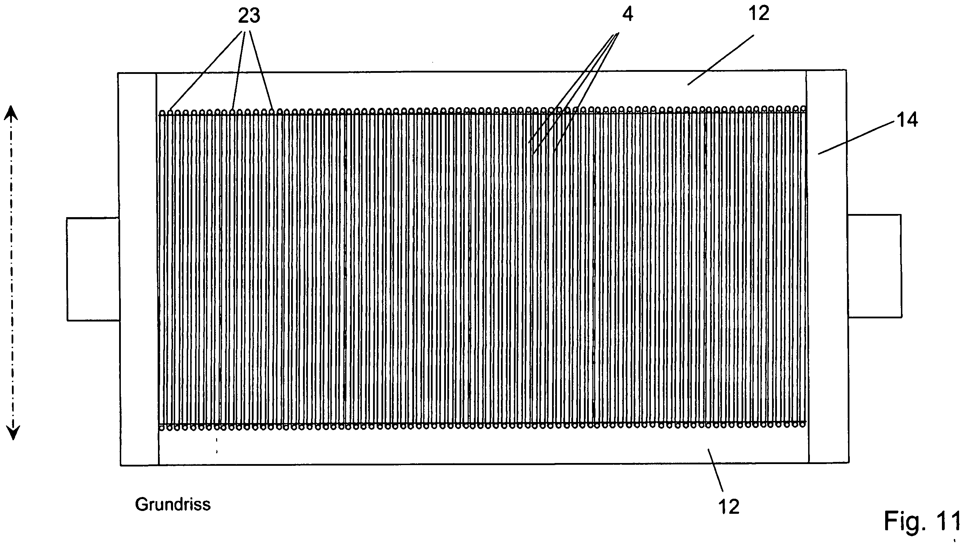

Die Figuren 11 bis 13 zeigen als weitere Herstellungsvariante, dass auch auf einen Spannrahmen verzichtet werden kann und die Schalung 14 selbst als Spannrahmen ausgebildet ist.

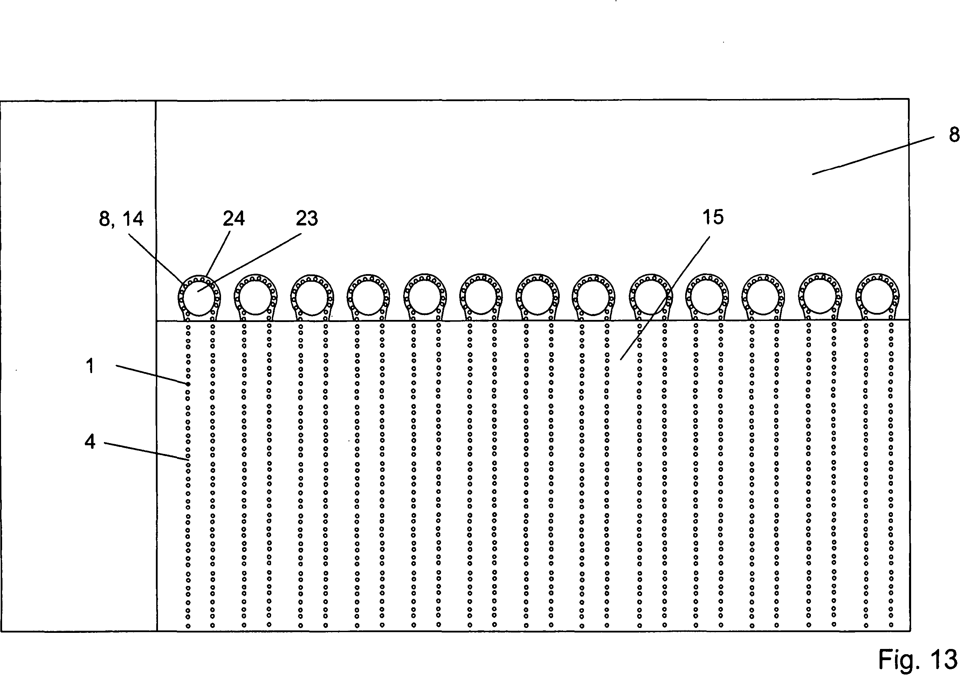

Zu diesem Zweck sind in der jeweiligen Seitenwand 12 der Schalung 14 halboffene Kedernuten 24 gemäß Figur 13 eingebracht, in welche in radialem Spiel jeweils ein Kederstab 23 einsteckbar ist.

Das Lichtleitergewebe 4 ist wiederum nun über die Kederstäbe 23 gewickelt und bildet so wiederum einen textilen Vorhang, wie er in Figur 13 dargestellt ist, wobei die Lichtleiter 1 senkrecht zur Zeichenebene der Figur 13 vorgesehen sind.

Die so mit Kederstäben ausgerüstete Schalung 14 kann nun wieder mit einem der vorher genannten Herstellungsverfahren mit einer gießfähigen Masse ausgegossen werden, wodurch wiederum die Betonmatrix in den Zwischenraum zwischen den Lichtleitergeweben 4 gelangt und auch die Lichtleitergewebe 4 durchdringt, um so einen hochbelastbaren Baukörper herzustellen. Auch hier ist wichtig, dass in einem einzigen Verfahrensschritt ein vollständiges Ausgießen einer solchen Schalung 14 gelingt.

Nach dem Aushärten der Betonmatrix können dann die Kederstäbe 23 gezogen werden.

In einer Weiterbildung der vorliegenden Erfindung ist es vorgesehen, dass die Kedernuten 24 nicht nach unten hin geöffnet sind, sie können auch nach oben hin geöffnet sein und aus der Schalung herausragen. Es kommt also nicht auf die Formgebung der Kedernuten darauf an, sondern nur auf die Tatsache, dass Kederstäbe vorhanden sind, welche in die Kedernuten mit radialen Spiel gesteckt werden und über welche das zu spannende Lichtleitergewebe 4 herumgeführt ist, um so einen Gießkörper nach Figur 13 zu bilden, der nach einem der vorher beschriebenen Ausgussverfahren dann mit der Betonmatrix ausgefüllt wird.

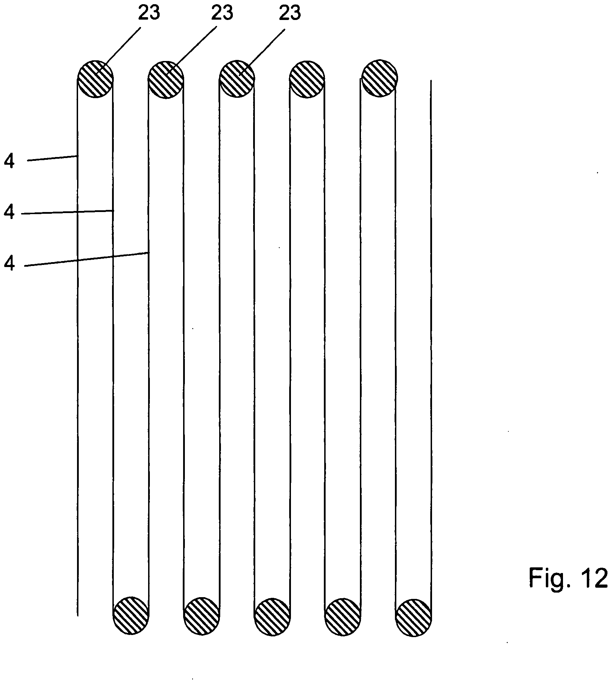

Figur 12 zeigt nochmals in schematisierter Weise, dass das Lichtleitergewebe 4 um die Kederstäbe 23 herumgewickelt ist, um so einen ausgießfähigen Gießkörper 30 zu erreichen.

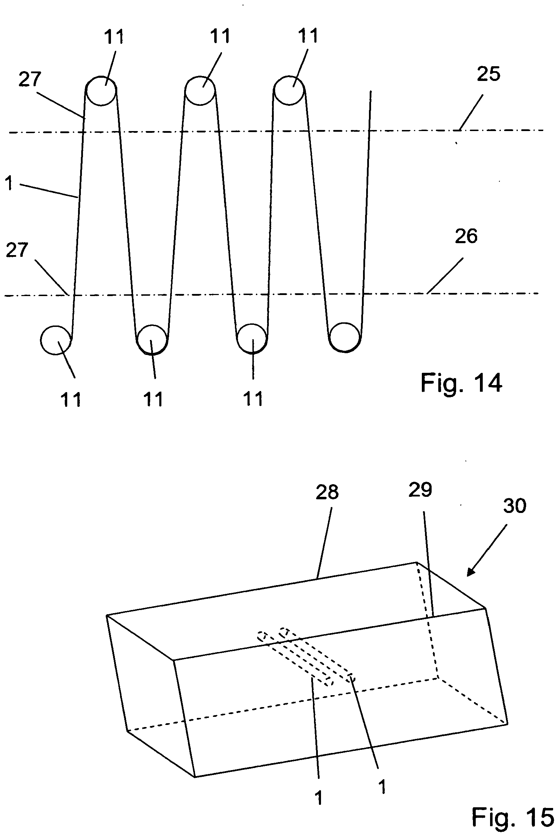

Die Figur 14 zeigt, dass bezogen auf alle vorher beschriebenen Ausführungsbeispiele es nicht unbedingt lösungsnotwendig ist, ein Lichtleitergewebe 4 zu verwenden. Stattdessen kann es vorgesehen sein, die Lichtleiterstäbe 1 selbst zickzackförmig auf entsprechenden Lamellen 11 oder Kederstäben 23 eines Spannrahmens 7 oder einer Schalung 14 aufzuwickeln und diese ebenfalls in gegenseitigem Abstand auf den Lamellen 11 oder den Kederstäben 23 so aufzuwickeln, die unter Spannung einen gegenseitigen Abstand erbringen.

Ein so hergestellter Baukörper wird nach dem Aushärten beispielsweise in den Schnittebenen 25, 26 durchgeschnitten, wodurch dann stets die oberen und unteren Stirnseiten 27 der Lichtleitstäbe 1 sichtbar werden und ihre strahlungsaufnehmenden Oberflächen an der Ober- und Unterseite des Baukörpers zeigen.

In Figur 15 ist als weiteres Ausführungsbeispiel noch dargestellt, dass ein Gießkörper 30 auch durch zwei voneinander beabstandet angeordnete Wände 28, 29 gebildet sein kann, wobei jede Wand entsprechende Durchbrechungen aufweist, durch welche Durchbrechungen jeweils ein Lichtleitstab 1 hindurch ragt. Solche Lichtleitstäbe können einen Durchmesser bis zu 60 mm aufweisen und sind deshalb stabförmig zwischen den Wänden 28, 29 gehalten. Wenn nun ein solcher Gießkörper von oben her ausgegossen wird, dann legt sich die aushärtbare Betonmatrix in den gesamten Innenraum des Gießkörpers 30 an, umschließt die stabförmigen Lichtleitstäbe, und es ist damit sofort ein entsprechend geeigneter Baukörper hergestellt. Man kann die Wände 28, 29 sofort als Baukörperwand verwenden, oder man kann die Wände 28, 29 entfernen und den dadurch gebildeten Baukörper dann unmittelbar weiter verarbeiten.

### Zeichnungslegende

- 1: Lichtleitstab
- 2: Monofilfaden
- 3: Keltfäden
- 4: Lichtleitergewebe
- 5: Pfeilrichtung
- 6: Pfeilrichtung
- 7: Spannrahmen
- 8: Oberteil
- 9: Unterteil
- 10: Rahmenteil
- 11: Lamelle
- 12: Seitenwand
- 13: Pfeilrichtung
- 14: Schalung
- 15: Betonmatrix
- 16: Spannrichtung
- 17: Pressstempel
- 18: Pfeilrichtung
- 19: Abschlussstempel
- 20: Rohr
- 21: Einfülltrichter
- 22: Pfeilrichtung
- 23: Kederstab
- 24: Kedernut
- 25: Schnittebene
- 26: Schnittebene
- 27: Stirnseite
- 28: Wand
- 29: Wand
- 30: Gießkörper

## Patentansprüche

1. Verfahren zur Herstellung eines lichtleitenden Baukörpers mit einer mindestens halboffenen Schalung (14), in welche eine Vielzahl von Lichtleitstäben (1) unter Bildung eines gegenseitigen Abstandes eingebracht werden und die Schalung mit einer aushärtbaren Gießmasse aufgefüllt wird, die aushärtet und nach der Aushärtung einen belastbaren Baukörper ausbildet, wobei in einem ersten Verfahrensschritt die Lichtleitstäbe (1) formgebend auf einem Gießkörper (30) fixiert werden, in einem zweiten Verfahrensschritt der so mit den Lichtleitstäben (1) bestückte Gießkörper (30) mit der aushärtbaren Masse (15) ausgefüllt wird und in einem dritten Verfahrensschritt die Schalung (14) entfernt wird, so dass der Gießkörper (30) in der aushärtbaren Masse verbleibt und die dort fixierten Lichtleitstäbe (1) unverrückbar in der aushärtbaren Masse verbleiben, **dadurch gekennzeichnet, dass** die Lichtleitstäbe (1) als bloße Fäden einzeln auf voneinander beabstandete Lamellen (11) oder Kederstäbe (23) im Abstand aufgewickelt werden oder dass die Lichtleitstäbe (1) in einem Lichtleitergewebe (4) textil oder mittels dünnem Draht gebunden sind, das zwischen abstandshaltenden und abstandsgebenden Lamellen (11) oder Kederstäben (23) aufgewickelt wird.

2. Verfahren nach Anspruch 1, **dadurch gekennzeichnet, dass** der Gießkörper (30) in einem einzigen Arbeitsgang mit der Vergussmasse ausgefüllt wird.

3. Verfahren nach Anspruch 1 oder 2, **dadurch gekennzeichnet, dass** die Lichtleitstäbe (1) in einem textilen Lichtleitergewebe (4) gebunden sind, das zickzackförmig zwischen voneinander beabstandet angeordneten Lamellen (11) eines Spannrahmens (7) aufgewickelt wird.

4. Verfahren nach Anspruch 1 oder 2, **dadurch gekennzeichnet, dass** in der Schalung (14) Kedernuten (24) eingebracht werden, in welche Kederstäbe (23) mit Spiel eingesteckt werden, und dass das Lichtleitergewebe (4) oder auch die Lichtleitstäbe (1) zwischen den Lamellen (11) oder den Kederstäben (23) aufgewickelt werden.

5. Verfahren nach einem der Ansprüche 1 bis 4, **dadurch gekennzeichnet, dass** sowohl die Schalung (14) und/oder der mit den Lichtleitern (1, 4) bewickelte Gießkörper (30) beim Eingießen und/oder vor dem Aushärten der Gießmasse gerüttelt werden.

6. Verfahren nach einem der Ansprüche 1 bis 5, **dadurch gekennzeichnet, dass** die Lamellen (11) nachträglich aus dem ausgehärteten oder teilweise ausgehärteten Baukörper herausgezogen werden.

7. Verfahren nach einem der Ansprüche 3 bis 6, **dadurch gekennzeichnet, dass** der aus dem Spannrahmen (7) gebildete Gießkörper (30) von unten her mit einer aushärtbaren Betonmatrix (15) angefüllt wird.

8. Verfahren nach einem der Ansprüche 3 bis 6, **dadurch gekennzeichnet, dass** der aus dem Spannrahmen (7) gebildete Gießkörper (30) von unten her unter Druck mit einer aushärtbaren Betonmatrix (15) ausgefüllt wird.

9. Verfahren nach einem der Ansprüche 3 bis 6, **dadurch gekennzeichnet, dass** der Spannrahmen (7) in eine Schalung (14) eingelegt wird und von oben her über einen Einfülltrichter (21) mit einer aushärtbaren Betonmatrix (15) befüllt wird.

## Claims

1. Method for producing a light-guiding building element with an at least semi-open encasing (14), in which a plurality of optical fibre rods (1) are introduced forming a mutual spacing and the encasing is filled with a hardenable casting compound, which hardens and forms a loadable building element after the hardening, wherein the optical fibre rods (1) are fixed in a shaping manner on a casting mould (30) in a first method step, the casting mould (30) thus fitted with the optical fibre rods (1) is filled with the hardenable compound (15) in a second method step and the encasing (14) is removed in a third method step, so the casting mould (30) remains in the hardenable compound and the optical fibre rods (1) fixed there remain immovably in the hardenable compound, **characterised in that** the optical fibre rods (1) are wound at a spacing individually as bare threads on slats (11), which are spaced apart from one another, or on piping rods (23), or **in that** the optical fibre rods (1) are bound in a light-guiding fabric (4) by a textile or by thin wire, which is wound on between space-keeping or space-providing slats (11) or piping rods (23)..

2. Method according to claim 1, **characterised in that** the casting mould (30) is filled with the casting compound in a single work operation.

3. Method according to claim 1 or 2, **characterised in that** the optical fibre rods (1) are bound in a textile light-guiding fabric (4), which is wound on in a zigzag shape between slats (11) of a clamping frame (7), which are arranged spaced apart from one another.

4. Method according to claim 1 or 2, **characterised in that** piping grooves (24), in which piping rods (23) are inserted with play, are introduced in the encasing (14), and **in that** the light-guiding fabric (4) or else the optical fibre rods (1) are wound on between the slats (11) or the piping rods (23).

5. Method according to any one of claims 1 to 4, **characterised in that** both the encasing (14) and/or the casting mould (30) wound with the light guides (1, 4) are shaken during the pouring in and/or before the hardening of the casting compound.

6. Method according to any one of claims 1 to 5, **characterised in that** the slats (11) are subsequently drawn out from the hardened or partially hardened building element.

7. Method according to any one of claims 3 to 6, **characterised in that** the casting mould (30) formed from the clamping frame (7) is filled from below with a hardenable concrete matrix (15).

8. Method according to any one of claims 3 to 6, **characterised in that** the casting mould (30) formed from the clamping frame (7) is filled from below under pressure with a hardenable concrete matrix (15).

9. Method according to any one of claims 3 to 6, **characterised in that** the clamping frame (7) is placed in an encasing (14) and filled from above by means of a filling funnel (21) with a hardenable concrete matrix (15).

## Revendications

1. Procédé pour fabriquer un élément de construction conducteur de lumière avec un coffrage (14) au moins à moitié ouvert dans lequel plusieurs barres conductrices de lumière (1) sont placées en formant un écartement mutuel, et le coffrage est rempli avec une masse de coulée durcissable qui durcit et, après durcissement, forme un élément de construction portant, étant précisé que lors d'une première étape, les barres conductrices de lumière (1) sont fixées suivant une forme donnée sur un corps de coulée (30), que lors d'une deuxième étape, le corps de coulée (30) ainsi garni avec les barres conductrices de lumière (1) est rempli avec la masse durcissable (15), et que lors de la troisième étape, le coffrage (14) est enlevé, de sorte que le corps de coulée (30) reste dans la masse durcissable et que les barres conductrices de lumière (1) fixées au corps de coulée (30) restent définitivement dans la masse durcissable (15), **caractérisé en ce que** les barres conductrices de lumière (1) sont enroulées individuellement de manière espacée, sous la forme de simples fils, sur des lamelles (11) ou des barres à bourrelet (23) espacées les unes des autres, ou **en ce que** les barres conductrices de lumière (1) sont reliées de manière textile ou à l'aide d'un fil mince en un tissu conducteur de lumière (4) qui est enroulé entre des lamelles (11) ou des barres à bourrelet (23) qui respectent et définissent un écartement.

2. Procédé selon la revendication 1, **caractérisé en ce que** le corps de coulée (30) est rempli en une seule opération avec la masse de coulée.

3. Procédé selon la revendication 1 ou 2, **caractérisé en ce que** les barres conductrices de lumière (1) sont reliées en un tissu textile conducteur de lumière (4) qui est enroulé en zigzag entre des lamelles (11) d'un cadre de tension (7) espacées les unes des autres.

4. Procédé selon la revendication 1 ou 2, **caractérisé en ce qu'**il est prévu dans le coffrage (14) des rainures pour bourrelet (24) dans lesquelles les barres à bourrelet (23) sont introduites avec du jeu, et **en ce que** le tissu conducteur de lumière (4) ou les barres conductrices de lumière (1) sont enroulées entre les lamelles (11) ou les barres à bourrelet (23).

5. Procédé selon l'une des revendications 1 à 4, **caractérisé en ce que** le coffrage (14) et/ou le corps de coulée (30) sur lesquels sont enroulés les conducteurs de lumière (1, 4) sont mis en vibration lors de la coulée et/ou avant le durcissement de la masse de coulée.

6. Procédé selon l'une des revendications 1 à 5, **caractérisé en ce que** les lamelles (11) sont retirées ultérieurement de l'élément de construction durci ou en partie durci.

7. Procédé selon l'une des revendications 3 à 6, **caractérisé en ce que** le corps de coulée (30) formé à partir du cadre de tension (7) est rempli avec une matrice de béton durcissable (15) par le bas.

8. Procédé selon l'une des revendications 3 à 6, **caractérisé en ce que** le corps de coulée (30) formé à partir du cadre de tension (7) est rempli avec une matrice de béton durcissable (15) par le bas, sous pression.

9. Procédé selon l'une des revendications 3 à 6, **caractérisé en ce que** le cadre de tension (7) est placé dans un coffrage (14) et est rempli avec une matrice de béton durcissable (15) par le haut, par l'intermédiaire d'une trémie de remplissage (21).
